# EUROPÄISCHE PATENTANMELDUNG

(11) **EP 3 006 146 A2**
(43) Veröffentlichungstag der Anmeldung: **13.04.2016**
(21) Anmeldenummer: 14192021.5
(22) Anmeldetag: 06.11.2014
(51) Int. Cl.: B23B 51/02, B23B 35/00

(54) **Bohrwerkzeug und Verfahren zur Modifikation einer Sacklochbohrung**

(30) Priorität: 22.09.2014 DE 202014007558 U
(71) Anmelder: WPT Nord GmbH, 24159 Kiel (DE)
(72) Erfinder: Thomsen, Ralf, 24229 Sprenge (DE)
(74) Vertreter: Eisenführ Speiser

(57) **Zusammenfassung**

Die Erfindung betrifft ein Bohrwerkzeug und ein Verfahren zur Modifikation einer Sacklochbohrung in einem Blattwurzeleinsatz einer Windenergieanlage. Die Erfindung betrifft ferner eine Vorrichtung und ein Verfahren zur Reinigung einer Sacklochbohrung. Das Verfahren zur Modifikation einer Sacklochbohrung umfasst: Entfernen einer in der Sacklochbohrung befindlichen Blattschraube, Einführen eines Bohrwerkzeugs in die Sacklochbohrung, Einspannen des Bohrwerkzeugs in eine Bohrmaschine, Vertiefung der Sacklochbohrung um eine vorbestimmte Tiefe, wobei ein maximaler Durchmesser des Endabschnitts und des Bohrungsgrundes nach der Vertiefung maximal einem Durchmesser des Endabschnitts vor der Vertiefung entspricht und ein Übergang vom Endabschnitt zum Bohrungsgrund nach der Vertiefung abgerundet ist, Entfernen des Bohrwerkzeugs und der Bohrmaschine, Montage der Blattschraube in die modifizierte Sacklochbohrung.

## Beschreibung

Die Erfindung betrifft ein Bohrwerkzeug und ein Verfahren zur Modifikation einer Sacklochbohrung in einem Blattwurzeleinsatz einer Windenergieanlage. Die Erfindung betrifft ferner eine Vorrichtung und ein Verfahren zur Reinigung einer Sacklochbohrung.

An Windenergieanlagen sind die Rotorblätter an der Rotornabe in der Regel über Blattwurzeleinsätze befestigt. In diesen Blattwurzeleinsätzen befinden sich in der Regel Sacklochbohrungen, in die Blattschrauben eingeschraubt sind, mit denen das Rotorblatt befestigt werden kann.

An verschiedenen Windenergieanlagen kann es an den Blattwurzeleinsätzen zu Beschädigungen, insbesondere in Form von Rissbildung ausgehend von den Sacklochbohrungen, kommen, was insbesondere auch durch die hohen, dynamischen Belastungen der Rotorblätter während des Betriebs der Windenergieanlage zusätzlich verstärkt werden kann. Im Extremfall können die Beschädigungen an Blattwurzeleisätzen zu einem Abriss der Rotorblätter führen. Ein solcher unkontrollierter Blattverlust an einer Windenergieanlage, insbesondere gerade auch während des Betriebs der Windenergieanlage, stellt eine große Gefahr dar und erfordert zeitlich, technologisch und finanziell aufwändige Reparatur- beziehungsweise Ersatzmaßnahmen.

Zur Behebung oder Vermeidung solcher Beschädigungen wird beispielsweise in der EP 2 623 771 A1 vorgeschlagen, das untere Ende der Sacklochbohrung auszufräsen und dadurch eine Rissbildung zu reduzieren oder zu vermeiden. Dies ist jedoch ein sehr aufwändiger Prozess, bei dem die Nabe der Windenergieanlage demontiert und die Rotorblätter einzeln zur Reparatur transportiert werden müssen, wie beispielsweise auf Seite 4 der Ausgabe 19 des Kundenmagazins "Journal" von E.ON Anlagenservice aus September 2012 beschrieben. Nach einer Reparatur müssen die Rotorblätter wieder an der Gondel beziehungsweise der Nabe der Windenergieanlage montiert werden. Dies ist mit einem erheblichen Aufwand verbunden und führt zu einer entsprechend langen Stillstandszeit der Windenergieanlage. Ferner ist für das Demontieren und Montieren der Rotorblätter in der Regel ein Autokran erforderlich, der zum einen teuer ist und zum anderen abhängig von der Verfügbarkeit zu weiteren Stillstandszeiten führt.

Es ist daher eine Aufgabe der vorliegenden Erfindung, eine Vorrichtung und ein Verfahren zur Modifikation einer Sacklochbohrung in einem Blattwurzeleinsatz einer Windenergieanlage anzugeben, welche einen oder mehrere der genannten Nachteile verringern oder beseitigen.

Diese Aufgabe wird erfindungsgemäß gelöst durch ein Bohrwerkzeug zur Modifikation, insbesondere Vertiefung, einer Sacklochbohrung mit einem Gewindeabschnitt, einem an den Gewindeabschnitt anschließenden Endabschnitt und einen an den Endabschnitt anschließenden Bohrungsgrund in einem Blattwurzeleinsatz einer Windenergieanlage im montierten Zustand eines Rotorblatts, mit einem Bohrabschnitt und einem Handhabungsabschnitt, wobei an einer Bohrspitze am Bohrabschnitt zwei Hauptschneiden und eine Querschneide ausgebildet sind, dadurch gekennzeichnet, dass ein maximaler Durchmesser des Bohrabschnitts maximal einem Durchmesser des Endabschnitts der Sacklochbohrung entspricht und ein jeweils radial äußeres Ende der beiden Hauptschneiden abgerundet ist, insbesondere einen Radius von mindestens 4 mm, aufweist.

Die Erfindung und ihre verschiedenen Aspekte beruhen insbesondere auf der Erkenntnis, dass durch den Einsatz eines erfindungsgemäßen Bohrwerkzeugs eine Modifikation der Sacklochbohrung im Blattwurzeleinsatz im montierten Zustand des Rotorblatts vorgenommen werden kann, und auf diese Weise auf eine Demontage und nachfolgende erneute Montage des Rotorblatts verzichtet werden kann. Die Erfindung beruht darüber hinaus unter anderem auf der Erkenntnis, dass existierende Verfahren zur Modifikation wie in der EP 2 623 771 A1 beschrieben, den Nachteil haben, dass durch die Ausfräsung das Material des Blattwurzeleinsatzes geschwächt wird, da die Materialdicke zwischen dem ausgefrästen Endabschnitt beziehungsweise Bohrungsgrund der Sacklochbohrung und der Außenoberfläche des Blattwurzeleinsatzes reduziert wird, gerade in einem Bereich, der ohnehin anfällig für eine Rissbildung ist. Aus dieser Erkenntnis heraus ist erfindungsgemäß vorgesehen, dass das Bohrwerkzeug im Bohrabschnitt einen maximalen Durchmesser aufweist, der maximal dem Durchmesser des Endabschnitts der Sacklochbohrung entspricht und bei der Durchführung der Modifikation der Sacklochbohrung (wie unten näher im Detail beschrieben) dementsprechend die Sacklochbohrung zwar vertieft beziehungsweise verlängert wird, dabei jedoch keine radiale Verbreiterung der Sacklochbohrung und damit keine Materialschwächung durch eine Querschnittsverringerung des Blattwurzeleinsatzes in radialer Richtung erzeugt wird.

Um die ungünstige, für die Rissbildung förderliche Kante am Übergang vom Endabschnitt zum Bohrungsgrund existierender Sacklochbohrungen in Blattwurzeleinsätzen zu modifizieren, wird neben beziehungsweise bei der Vertiefung der Sacklochbohrung durch die Abrundung der radial äußeren Enden der beiden Hauptschneiden des Bohrwerkzeugs ferner ein abgerundeter Übergang zwischen dem Endabschnitt und dem Bohrungsgrund nach der Modifikation der Sacklochbohrung erzielt.

Mit dem erfindungsgemäßen Bohrwerkzeug ist es somit möglich, eine existierende Sacklochbohrung eines Blattwurzeleinsatzes so zu modifizieren, dass die Sacklochbohrung in radialer Richtung nicht vergrößert wird, gleichzeitig jedoch ein gerundeter Übergang vom Endabschnitt zum Bohrungsgrund geschaffen wird.

Ein weiterer wichtiger Vorteil des erfindungsgemäßen Bohrwerkzeugs ergibt sich dadurch, dass mit einem solchen Bohrwerkzeug, welches zum Einspannen in eine Bohrmaschine geeignet ist, und das zur Modifikation einer Sacklochbohrung, insbesondere zur Vertiefung der Sacklochbohrung, eingesetzt wird, die Modifikation der Sacklochbohrung-nach Entfernen einer in dieser Sacklochbohrung eingeschraubten Blattschraube - vor Ort an der Gondel beziehungsweise in der Nabe im montierten Zustand des Rotorblatts erfolgen kann.

Da (insbesondere bei Stillstand der Windenergieanlage, wie für Wartungs- oder Reparaturzwecke vorgesehen) ein Teil der Vielzahl von für die Rotorblattbefestigung vorgesehenen Blattschrauben entfernt werden können, ohne dass das Rotorblatt demontiert werden muss oder die sichere Befestigung des Rotorblatts im Stillstand gefährdet wäre, kann mit dem erfindungsgemäßen Bohrwerkzeug sukzessive jede der Sacklochbohrungen eines Blattwurzeleinsatzes modifiziert werden. Da das (anstelle der Blattschraube in die Sacklochbohrung zur Modifikation einzuführende) Bohrwerkzeug vor dem Einspannen in eine Bohrmaschine in die Sacklochbohrung eingeführt werden kann, ist somit in längsaxialer Richtung über der Öffnung der Sacklochbohrung nur ein Bauraum erforderlich, der die Einspannung des Bohrwerkzeugs in die Bohrmaschine und die Bedienung der Bohrmaschine ermöglicht. Auch nach der Modifikation kann die Bohrmaschine vom Bohrwerkzeug gelöst werden, bevor das Bohrwerkzeug wieder aus der Sacklochbohrung entfernt wird. Ferner ist bei der Modifikation lediglich eine axiale Vertiefung mittels des in die Bohrmaschine eingespannten Bohrwerkzeugs vorgesehen, sodass auch kein Bewegungsraum beziehungsweise Gegenlager für eine radiale Ausfräsung erforderlich ist, was unter den beengten Platzverhältnissen im montierten Zustand des Rotorblatts besonders vorteilhaft ist.

In einer bevorzugten Weiterbildung des Bohrwerkzeugs ist vorgesehen, dass die Querschneide abgerundet ist, insbesondere einen Radius von mindestens 4 mm, aufweist. Die Abrundung auch der Querschneide hat den Vorteil, dass bei der Modifikation und Vertiefung der Sacklochbohrung auch der tiefste Punkt des Bohrungsgrundes, der durch die Querschneide erzeugt wird, keine scharfe Kante beziehungsweise Spitze aufweist, sondern eine Rundung. Dadurch kann auch die Rissbildung in diesen Bereich weiter reduziert beziehungsweise verhindert werden.

Ferner ist bevorzugt, dass am Bohrabschnitt von der Bohrspitze ausgehend Nebenschneiden ausgebildet sind, wobei die Nebenschneiden verschliffen sind, was insbesondere bedeutet, dass die Nebenschneiden im Durchmesser kleiner geschliffen sind, um das vorhandene Gewinde beim Tauchen des Bohrers nicht zu beschädigen.

Eine weitere bevorzugte Ausführungsform des Bohrwerkzeugs sieht vor, dass am Handhabungsabschnitt eine Einstellvorrichtung angeordnet ist, die ausgebildet ist, das Eindringen des Bohrwerkzeugs in die Sacklochbohrung über eine vorbestimmte, einstellbare Tiefe hinaus zu verhindern und wobei sich vorzugsweise eine radiale Führung ergibt. Eine solche Einstellvorrichtung kann beispielsweise einen Anschlag bilden, bis zu dem das Bohrwerkzeug beim Vertiefen der Sacklochbohrung in die Sacklochbohrung eindringen kann, wobei ein weiteres Eindringen darüber hinaus jedoch verhindert, beispielsweise weil der Anschlag einen größeren Durchmesser aufweist als die Öffnung der Sacklochbohrung. Auf diese Weise kann in einfacher Art verhindert werden, dass bei der Modifikation einer Sacklochbohrung diese zu stark vertieft wird.

Vorzugsweise weist der Handhabungsabschnitt ein Außengewinde auf und die Einstellvorrichtung ein Innengewinde, wobei das Außengewinde des Handhabungsabschnitts mit dem Innengewinde in Eingriff steht, sodass vorzugsweise die vorbestimmte Tiefe durch eine Drehung der Einstellvorrichtung um den Handhabungsabschnitt eingestellt werden kann. Durch diese Ausbildung ergibt sich eine einfache und praktikable Möglichkeit, die vorbestimmte Tiefe, bis zu der das Bohrwerkzeug in die Sacklochbohrung eingeführt werden kann, voreingestellt werden kann. Der Abstand zwischen der Einstellvorrichtung und der Bohrspitze ergibt somit die Länge der Sacklochbohrung nach der Modifikation beziehungsweise Vertiefung.

Gemäß einem weiteren Aspekt der Erfindung ist eine Reinigungsvorrichtung zur Reinigung einer Sacklochbohrung, insbesondere nach einer Modifikation, vorgesehen umfassend eine mit einer Druckluftquelle verbindbare Druckluftleitung, deren Durchmesser geringer ist als der Durchmesser der zu reinigenden Sacklochbohrung, eine mit einer Unterdruckquelle verbindbare Saugleitung, deren Durchmesser vorzugsweise größer ist als der Durchmesser der zu reinigenden Sacklochbohrung, wobei ein Abschnitt der Druckluftleitung innerhalb der Saugleitung verläuft und ein erstes Ende der Druckluftleitung in Längsrichtung der Druckluftleitung über ein erstes Ende der Saugleitung hinausragt.

Dieser Aspekt der Erfindung beruht unter anderem auch auf der Erkenntnis, dass nach einer Modifikation einer Sacklochbohrung eines Blattwurzeleinsatzes die dabei anfallenden Materialreste, wie Späne, aus der Sacklochbohrung entfernt werden müssen, bevor die Blattschraube wieder in die modifizierte Sacklochbohrung eingeschraubt werden kann. Gegenüber bekanntem Ausblasen der Sacklochbohrung ermöglicht die erfindungsgemäße Reinigungsvorrichtung eine zuverlässigere Reinigung der Sacklochbohrung ohne dass bei der Reinigung Bohrspäne in das benachbarte Kugellager (Drehlager des Blattes) gelangen. Da ein erstes Ende der Druckluftleitung in Längsrichtung über ein erstes Ende der Saugleitung der Reinigungsvorrichtung hinausragt, ist es möglich, die Druckluftleitung weiter in die Sacklochbohrung einzubringen als die Saugleitung. Die Saugleitung kann auch außerhalb der Sacklochbohrung an der Öffnung der Sacklochbohrung verbleiben, wohingegen das erste in der Druckluftleitung in die Sackluftbohrung hineinragt. Auf diese Weise kann Druckluft aus dem ersten Ende der Druckluftleitung tief in die Sacklochbohrung eingebracht werden und durch Erzeugen eines Unterdrucks in der Saugleitung durch das offene Ende der Sacklochbohrung abgesaugt werden. Auf diese Weise kann eine Strömung im Wesentlichen vom geschlossenen Ende der Sacklochbohrung zum offenen Ende der Sacklochbohrung hin erzeugt werden und somit auch am geschlossenen Ende der Sacklochbohrung befindliche Späne besser aus der Sacklochbohrung entfernt werden.

Vorzugsweise beträgt der Abstand zwischen dem aus dem ersten Ende der Saugleitung hinausragenden ersten Ende der Druckluftleitung und dem ersten Ende der Saugleitung mindestens 50 % der Länge beziehungsweise Tiefe der modifizierten Sacklochbohrung, insbesondere mindestens 60 %, mindestens 70 %, mindestens 80 % oder mindestens 90 %.

Ferner ist bevorzugt, dass die Druckluftleitung relativ zur Saugleitung beweglich angeordnet ist, insbesondere in Längsrichtung der Druckluftleitung. Auf diese Weise kann der Abstand zwischen dem ersten Ende der Druckluftleitung und dem ersten Ende der Saugleitung verändert werden, beispielsweise um eine Anpassung auf Sacklochbohrungen mit verschiedener Tiefe bzw. Länge zu ermöglichen. Beispielsweise kann die Reinigungsvorrichtung auch so ausgebildet sein, dass das erste Ende der Druckluftleitung vollständig in die Saugleitung zurückgezogen werden kann, beispielsweise in einer Transportposition, und in einer Betriebsposition in Längsrichtung der Druckluftleitung so innerhalb der Saugleitung verschoben werden kann, dass das erste Ende der Druckluftleitung über das erste Ende der Saugleitung hinausragt, und zwar vorzugsweise in der bevorzugten, auf die Länge beziehungsweise Tiefe einer modifizierten Sacklochbohrung abgestimmten Länge.

Gemäß einem weiteren Aspekt der Erfindung wird die eingangs genannte Aufgabe gelöst durch ein Verfahren zur Modifikation einer Sacklochbohrung mit einem Gewindeabschnitt, einem an den Gewindeabschnitt anschließenden Endabschnitt und einen an den Endabschnitt anschließenden Bohrungsgrund in einem Blattwurzeleinsatz einer Windenergieanlage im montierten Zustand eines Rotorblatts, umfassend: Entfernen einer in der Sacklochbohrung befindlichen Blattschraube, Einführen eines Bohrwerkzeugs, vorzugsweise eines zuvor beschriebenen Bohrwerkzeugs, in die Sacklochbohrung, Einspannen des Bohrwerkzeugs in eine Bohrmaschine, Vertiefung der Sacklochbohrung um eine vorbestimmte Tiefe, wobei ein maximaler Durchmesser des Endabschnitts und des Bohrungsgrundes nach der Vertiefung maximal einem Durchmesser des Endabschnitts vor der Vertiefung entspricht und ein Übergang vom Endabschnitt zum Bohrungsgrund nach der Vertiefung abgerundet ist, vorzugsweise mit einem Radius von mindestens 2 mm, vorzugsweise mindestens 4 mm, Entfernen des Bohrwerkzeugs und der Bohrmaschine, Montage der Blattschraube in die modifizierte Sacklochbohrung, insbesondere unter Berücksichtigung eines maximalen Drehmoments.

Das Verfahren sieht vor, dass zur Modifikation der Sacklochbohrung zunächst die Blattschraube entfernt wird und dann mittels eines Bohrwerkzeugs, das zunächst in die Sacklochbohrung eingeführt und dann in eine Bohrmaschine eingespannt wird, die Sacklochbohrung vertieft wird. Diese Vertiefung erfolgt nicht beliebig, sondern um eine vorbestimmte Tiefe, die vorzugsweise wie oben beschrieben am Bohrwerkzeug einstellbar ist. Ferner wird bei der Vertiefung der Sacklochbohrung lediglich die längsaxiale Ausdehnung des Sacklochs vergrößert, nicht jedoch die radiale Ausdehnung. Beim Entfernen des Bohrwerkzeugs und der Bohrmaschine wird vorzugweise zunächst die Bohrmaschine vom Bohrwerkzeug abgenommen und anschließend das Bohrwerkzeug aus der Sacklochbohrung entfernt. Falls es die örtlichen Voraussetzungen des an der Rotornabe montierten Rotorblatts erlauben, kann auch das Bohrwerkzeug im in die Bohrmaschine eingespannten Zustand in die Sacklochbohrung eingeführt und/oder aus dieser entfernt werden. Die Möglichkeit, die Einspannung des Bohrwerkzeugs in die Bohrmaschine vorzunehmen beziehungsweise zu lösen, während das Bohrwerkzeug sich schon oder noch in der Sacklochbohrung befindet, ermöglicht jedoch auch den Einsatz in besonders beengten Bauräumen.

Nach erfolgter Modifikation wird die Blattschraube wieder in der nun modifizierten Sacklochbohrung befestigt. Das temporäre Entfernen der in der zu modifizierenden Sacklochbohrung befindlichen Blattschraube kann im montierten Zustand des Rotorblatts erfolgen, das heißt es ist keine Demontage und Montage des Rotorblattes erforderlich.

Das Verfahren kann vorzugsweise fortgebildet werden durch Reinigen der Sacklochbohrung nach der Vertiefung, vorzugsweise durch Einbringen von Druckluft im Bereich des Endabschnitts und/oder des Bohrungsgrundes der Sacklochbohrung und, vorzugsweise gleichzeitiges, Absaugen von Luft im Bereich einer Öffnung der Sacklochbohrung, insbesondere mittels einer zuvor beschriebenen Reinigungsvorrichtung.

Durch das Einbringen von Druckluft in die Sacklochbohrung, insbesondere in den Bereich des Endabschnitts und/oder des Bohrungsgrundes der Sacklochbohrung, und das Absaugen von Luft im Bereich der Öffnung der Sacklochbohrung wird die Entfernung von Bearbeitungsrückständen, insbesondere Spänen, aus der Sacklochbohrung erleichtert und somit eine gründlichere Reinigung ermöglicht.

Eine weitere bevorzugte Ausgestaltung des Verfahrens sieht vor, dass der Endabschnitt und/oder der Bohrungsgrund der Sacklochbohrung auf mögliche Risse im Blattwurzeleinsatz vor einer Modifikation der Sacklochbohrung, insbesondere vor der Vertiefung der Sacklochbohrung, geprüft wird, wobei die Prüfung vorzugsweise mittels eines Wirbelstrom-Prüfverfahrens erfolgt. Eine solche Prüfung auf Beschädigungen, wie Risse im Blattwurzeleinsatz, ist wichtig, um beurteilen zu können, ob eine Reparatur mittels einer Modifikation der Sacklochbohrung noch möglich ist oder die Beschädigungen im Blattwurzeleinsatz bereits zu weit fortgeschritten sind, und ein Austausch des Blattwurzeleinsatzes oder des gesamten Rotorblatts nicht mehr vermieden werden kann. Ferner ist eine solche Prüfung hilfreich, um vorhandene Beschädigungen, wie beispielsweise Risse, daraufhin beurteilen zu können, ob zusätzlich zu einer Modifikation der Sacklochbohrung auch eine Reparatur von Rissen möglich beziehungsweise angezeigt ist.

Ferner kann das Verfahren fortgebildet werden durch Kontrolle des Bohrungsgrundes der Sacklochbohrung nach einer Modifikation, insbesondere auf Oberflächenunebenheiten, wie Riefen Kerben oder scharfen Kanten, vorzugsweise nach der Vertiefung der Sacklochbohrung, wobei die Kontrolle vorzugsweise mittels einer Videoskopie erfolgt. Eine solche Kontrolle kann dabei unterstützen, sicherzustellen, dass nach einer Modifikation keine Oberflächenunebenheiten, die zu einer Rissbildung führen können, vorhanden sind.

Bevorzugt ist dabei ferner eine Dokumentation des Endabschnitts nach einer Modifikation, insbesondere nach der Vertiefung der Sacklochbohrung, wobei die Dokumentation vorzugsweise durch Erstellung von Fotografien der Sacklochbohrung, insbesondere des Endabschnitts erfolgt. Hierdurch kann der nach der Modifikation hergestellte Stand der Sacklochbohrung festgehalten werden.

Ferner ist eine Weiterbildung des Verfahrens bevorzugt, bei der die vorbestimmte Tiefe vor der Vertiefung der Sacklochbohrung am Bohrwerkzeug eingestellt wird, vorzugsweise mittels einer Einstellvorrichtung, wobei das Einstellen vorzugsweise vor dem Einspannen des Borwerkzeugs in die Bohrmaschine erfolgt. Auf diese Weise kann, wie auch oben beschrieben, die durch die Modifikation zu erreichende Länge beziehungsweise Tiefe der Sacklochbohrung am Bohrwerkzeug voreingestellt werden, um auf einfache Weise sicherzustellen, dass keine zu starke Vertiefung der Sacklochbohrung erfolgt.

Eine weitere bevorzugte Ausgestaltung des Verfahrens sieht vor, dass ein bei einer Prüfung des Endabschnitts und/oder des Bohrungsgrundes ermittelter Riss im Blattwurzeleinsatz mit einer Schweißnaht geschlossen wird, wobei vorzugsweise das Schließen von Rissen im Blattwurzeleinsatz vor einer Vertiefung der Sacklochbohrung erfolgt. Insbesondere wenn die Prüfung des Endabschnitts und des Bohrungsgrundes Beschädigungen wie Risse ermittelt wurden und eine Beurteilung ergeben hat, dass diese Risse repariert werden können, ist vorgesehen, dass diese ermittelten Risse durch Aufbringen einer Schweißnaht geschlossen werden.

Dabei ist insbesondere bevorzugt, dass zwischen der vorbereiteten Schweißnaht und einer GFK-Anbindung des Rotorblatts ein Kühlelement vorzugsweise an einer Rückseite eines mit der Schweißnaht zu versehenden Bereichs angeordnet wird, und vorzugsweise während der Schweißarbeiten eine Temperatur, insbesondere im Bereich der GFK-Anbindung des Rotorblatts, erfasst und vorzugsweise protokolliert wird. Dies ist insbesondere bevorzugt, da ein glasfaserverstärkter Kunststoff (GFK), der häufig in Rotorblättern verwendet wird, meist sehr temperaturempfindlich ist und beim Schweißen von Rissen im Blattwurzeleinsatz sicherzustellen ist, dass keine zu hohe Temperatur in das Rotorblatt, insbesondere die GFK-Anbindung des Rotorblatts, eingeleitet werden.

Gemäß einem weiteren Aspekt der Erfindung wird die eingangs genannte Aufgabe gelöst durch ein Verfahren zur Modifikation mehrerer Sacklochbohrungen in einem Blattwurzeleinsatz einer Windenergieanlage im montierten Zustand eines Rotorblatts: umfassend: Entfernen eines Teils der in den Sacklochbohrungen in einem Blattwurzeleinsatz befindlichen Blattschrauben, insbesondere Entfernen der Blattschrauben aus jeder zweiten Sacklochbohrung, wobei vorzugsweise die Blattschrauben und/oder die Sacklochbohrungen zuvor nummeriert werden, Modifizieren der Sacklochbohrungen, aus denen die Blattschraube entfernt wurde nach einem zuvor beschriebenen Verfahren.

Wie auch bereits oben beschrieben, können - insbesondere bei Stillstand der Windenergieanlage - mehrere Blattschrauben, insbesondere bis zur Hälfte der Blattschrauben, entfernt werden, ohne das Rotorblatt demontieren zu müssen. Auf diese Weise können mehrere Blattschrauben, insbesondere jede zweite Blattschraube, aus ihren jeweiligen Sacklochbohrungen entfernt werden und diese Sacklochbohrungen modifiziert werden. Anschließend werden dann vorzugsweise die Blattschrauben wieder in die modifizierten Sacklochbohrungen eingebracht und in einem nächsten Verfahrensdurchgang die Blattschrauben aus den noch nicht modifizierten Sacklochbohrungen entfernt und dann auch diese Sacklochbohrungen modifiziert. Vorzugsweise werden zwei benachbarte Blattschrauben einer Blattarretierung paarweise entfernt. Der Grund hierfür ist, dass zwei Sacklochbohrungen nebeneinander bearbeitet werden und dass die Reinigungsvorrichtung sich besser positionieren lässt.

Gemäß einem weiteren Aspekt der Erfindung ist ein Verfahren zum Reinigen einer Sacklochbohrung mit einem Gewindeabschnitt, einem an den Gewindeabschnitt anschließenden Endabschnitt und einen an den Endabschnitt anschließenden Bohrungsgrund, insbesondere nach einer Modifikation bzw. Vertiefung der Sacklochbohrung vorgesehen, umfassend: Einbringen von Druckluft im Bereich des Bohrungsgrundes und/oder des Endabschnitts der Sacklochbohrung und, vorzugsweise gleichzeitiges, Absaugen von Luft im Bereich einer Öffnung der Sacklochbohrung.

Zu den weiteren Vorteilen, Ausführungsvarianten und Ausführungsdetails dieser weiteren Aspekte der Erfindung und ihrer möglichen Fortbildungen wird auch auf vorangegangene Beschreibung zu den entsprechenden Vorrichtungsmerkmalen verwiesen. Bevorzugte Ausführungsformen der Erfindung werden beispielhaft anhand der beiliegenden Figuren beschrieben. Es zeigen:
- Figur 1:: eine beispielhafte Ausführungsform eines erfindungsgemäßen Bohrwerkzeugs;
- Figur 2:: einen vergrößerten Ausschnitt aus Figur 1;
- Figur 3:: eine beispielhafte Ausführungsform einer erfindungsgemäßen Reinigungsvorrichtung;
- Figur 4:: eine zu modifizierende Sacklochbohrung in einem Blattwurzeleinsatz mit eingeschraubter Blattschraube;
- Figur 5:: ein Ende einer zu modifizierenden Sacklochbohrung mit eingeschraubter Blattschraube;
- Figur 6:: die Sacklochbohrung gemäß Figur 5 nach der Modifizierung;
- Figur 7:: einen Teil eines Blattwurzeleinsatzes mit einer Mehrzahl von eingeschraubten Blattschrauben; und
- Figur 8:: eine dreidimensionale Ansicht der in Figur 7 mit einem Kreis markierten Blattschrauben der Rotorblattarretierung.

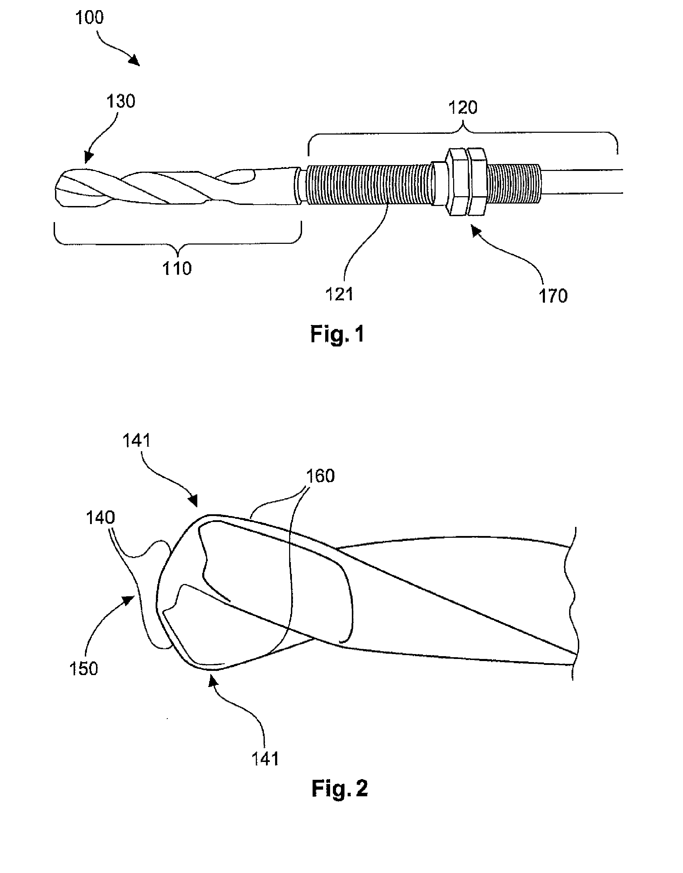

Das in den Figuren 1 und 2 dargestellte Bohrwerkzeug 100 zur Modifikation einer Sacklochbohrung weist einen Bohrabschnitt 110 und einen Handhabungsabschnitt 120 auf. Am Bohrabschnitt 110 ist eine Bohrspitze 130 mit zwei Hauptschneiden 140 und einer Querschneide 150 ausgebildet. Ferner sind am Bohrabschnitt 110 Nebenschneiden 160 ausgebildet. Am Handhabungsabschnitt 120 ist ein Außengewinde 121 ausgebildet, auf dem eine Einstellvorrichtung 170 mit einem Innengewinde aufgeschraubt ist. Die Einstellvorrichtung 170 ist als Stellmutter mit Führungsbund ausgebildet und dient zum Einstellen der Bohrtiefe mit dem Bohrwerkzeug 100, das heißt, dass das Eindringen des Bohrwerkzeugs 100 in die Sacklochbohrung über das Einstellen der Einstellvorrichtung 170 auf eine vorbestimmte Tiefe festgelegt werden kann, sodass ein über diese vorbestimmte Tiefe hinausgehendes Eindringen des Bohrwerkzeugs 100 in eine Sacklochbohrung verhindert wird. Aufgrund der Gewindeverbindung zwischen Handhabungsabschnitt 120 und Einstellvorrichtung 170 kann durch eine Drehung der Einstellvorrichtung 170 um den Handhabungsabschnitt 120 die vorbestimmte Tiefe einfach voreingestellt werden. Zusätzlich dient die Tiefenanschlagsbuchse auch als radiale Führung.

Der maximale Durchmesser des Bohrabschnitts 110 ist so auf zu modifizierende Sacklochbohrungen abgestimmt, dass der maximale Durchmesser des Bohrabschnitts 110 maximal den Durchmesser des Endabschnitts der Sacklochbohrung vor deren Modifizierung entspricht. Auf diese Weise wird sichergestellt, dass mit dem Bohrwerkzeug 100 keine radiale Aufweitung der Sacklochbohrung erfolgt.

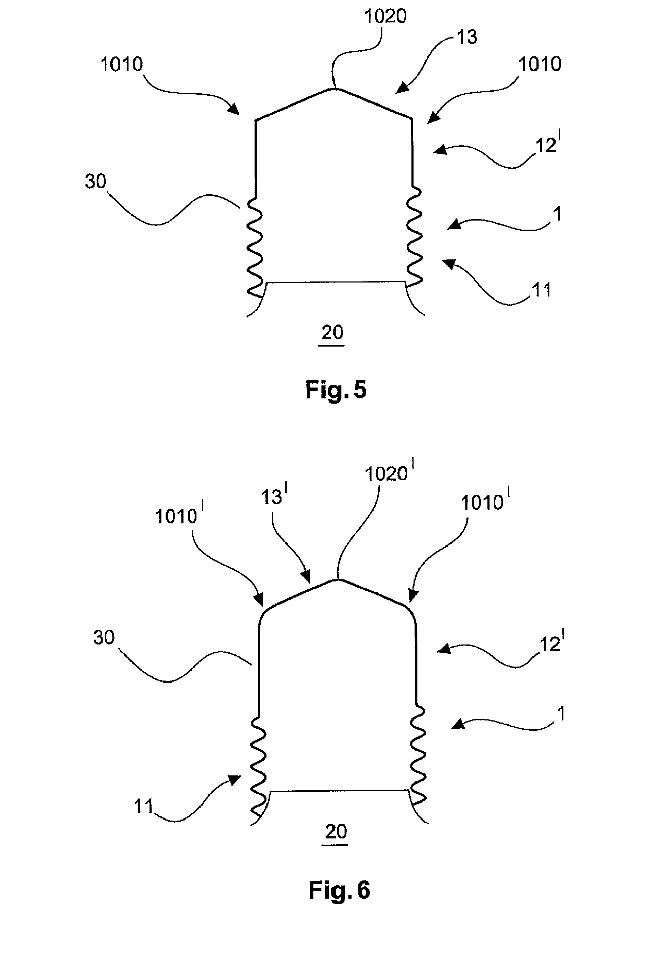

Um bei einer Vertiefung der Sacklochbohrung ungerundete Kanten, die zu einer Rissbildung führen können, zu beseitigen, sind die jeweils radial äußeren Enden 141 der beiden Hauptschneiden 140 abgerundet, im in den Figuren 1 und 2 gezeigten Beispiel mit einem Radius von 4 Millimetern. Auf diese Weise kann die in Figur 6 gezeigte Geometrie mit einem abgerundeten Übergang 1010' zwischen dem Endabschnitt 12' und dem Bohrungsgrund 13' erzielt werden.

Ferner ist die Querschneide 150 des Bohrwerkzeugs 100 abgerundet, sodass bei der Vertiefung auch die in Figur 6 gezeigte abgerundete Spitze 1020' am Bohrungsgrund 13' der modifizierten Sacklochbohrung entsteht.

Die Nebenschneiden 160 sind verschliffen, wobei sie im Durchmesser kleiner geschliffen sind, um das vorhandene Gewinde beim Tauchen des Bohrers nicht zu beschädigen.

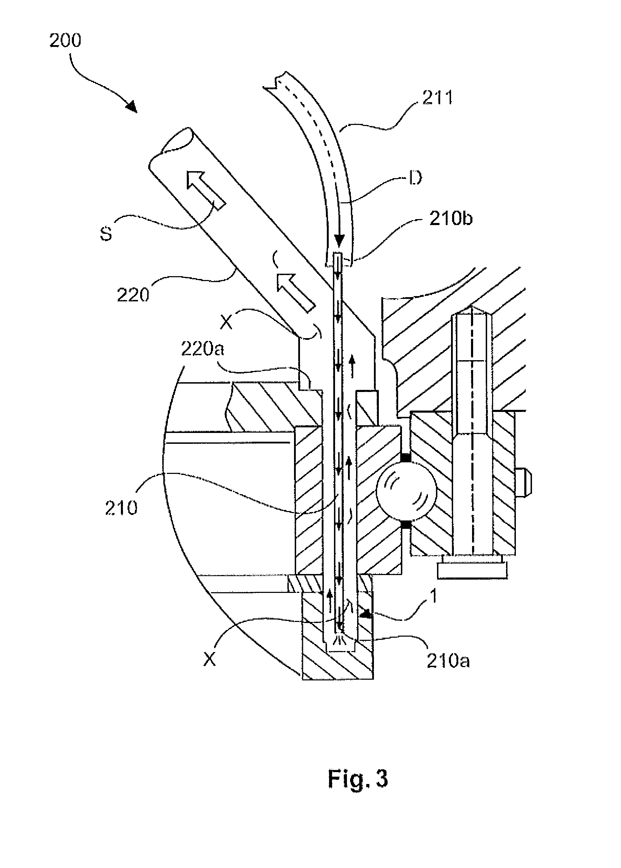

Figur 3 zeigt eine Reinigungsvorrichtung 200, mit der nach einer Modifikation einer Sacklochbohrung 1 bei der Modifikation entstandene Späne X aus der Sacklochbohrung 1 entfernt werden können. Die Reinigungsvorrichtung 200 weist hierzu eine mit einer Druckluftquelle (nicht dargestellt) verbindbare Druckluftleitung 210 auf, deren Durchmesser geringer ist als der Durchmesser der zu reinigenden Sacklochbohrung 1. Die Reinigungsvorrichtung 200 weist ferner eine mit einer Unterdruckquelle (nicht dargestellt) verbindbare Saugleitung 220 auf, deren Durchmesser größer ist als der Durchmesser der zu reinigenden Sacklochbohrung 1. Ein Abschnitt der Druckluftleitung 210 verläuft innerhalb der Saugleitung 220, wobei ein erstes Ende 210a der Druckluftleitung 210 in Längsrichtung der Druckluftleitung über ein erstes Ende 220a der Saugleitung 220 hinausragt. Auf diese Weise kann das erste Ende 210a der Druckluftleitung 210 tief in die Sacklochbohrung 1 eingebracht werden, während das erste Ende 220a der Saugleitung 220 am offenen Ende der Sacklochbohrung 1 verbleibt. An ein zweites Ende 210b der Druckluftleitung 210 schließt sich ein Druckluftschlauch 211 an, mit dem die Druckluftleitung 210 an eine Druckluftquelle (nicht dargestellt) angeschlossen werden kann. Über den Druckluftschlauch 211 und die Druckluftleitung 210 kann somit Druckluft D zum geschlossenen Ende der Sacklochbohrung 1 verbracht werden und über die an der Öffnung der Sacklochbohrung 1 angeordnete Saugleitung 220 als Saugluft S wieder abgesaugt werden. Auf diese Weise kann eine Luftströmung vom geschlossenen Ende der Sacklochbohrung 1 zu derem offenen Ende hin erreicht werden, welche die Späne X mitnehmen und somit aus der Sacklochbohrung entfernen kann.

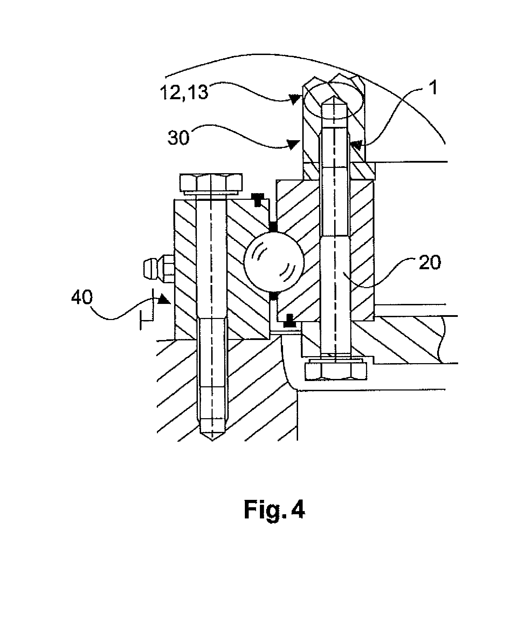

In Figur 4 ist eine Sacklochbohrung 1 in einem Blattlagereinsatz 30 dargestellt, wobei der Endabschnitt 12 und der Bohrungsgrund 13 durch einen Ring hervorgehoben sind. In die Sacklochbohrung 1 ist eine Blattschraube 20 eingeschraubt. Mit 40 ist das Blattlager bezeichnet. In Figur 4 ist die Sacklochbohrung 1 vor ihrer Modifikation dargestellt, die eckige, nicht abgerundete Kante im Übergang vom Endabschnitt zum Bohrungsgrund ist in Figur 4 schon zu erkennen.

Die Blattwurzeleinsätze sind in der Regel aus Aluminium ausgebildet oder weisen Aluminium auf, insbesondere bevorzugt ist eine Aluminium-Mangan-Legierung, die beispielsweise AlMg5.

Der Vorteil des Bohrwerkzeugs und Verfahrens zur Modifikation einer Sacklochbohrung wird insbesondere im Vergleich der Figuren 5 und 6 deutlich: In Figur 5 ist die Sacklochbohrung 1 im Ursprungszustand, das heißt im noch nicht modifizierten Zustand gezeigt. Die Sacklochbohrung 1 weist einen Gewindeabschnitt 11, einen an diesem Gewindeabschnitt anschließenden Endabschnitt 12 sowie einen an diesen Endabschnitt anschließenden Bohrungsgrund 13 auf, der sich zum geschlossenen Ende der Sacklochbohrung 1 hin verjüngt. Deutlich ist dabei der Übergang in Form einer eckigen Kante 1010 vom Endabschnitt 12 zum Bohrungsgrund 13 zu erkennen. Am geschlossenen Ende des Bohrungsgrunds 13 ist eine Bohrungsgrundspitze 1020 zu erkennen.

In Figur 6 ist die in Figur 5 gezeigte Sacklochbohrung 1 nach einer Modifikation dargestellt. Im Vergleich der beiden Figuren 5 und 6 ist insbesondere zu erkennen, dass der sich an den Gewindeabschnitt 11 anschließende Endabschnitt 12 nach der Modifikation verlängert ist, wie mit dem Bezugszeichen 12' in Figur 6 bezeichnet. Ferner ist zu erkennen, dass am Übergang zwischen dem verlängerten Endabschnitt 12' und dem neu geschaffenen Bohrungsgrund 13' ein gerundeter Übergang 1010' hergestellt wurde, der einen Radius von 4 Millimetern aufweist, der mit dem in Figur 1 und 2 dargestellten Bohrwerkzeug geschaffen wurde, wobei keine radiale Aufweitung der Sacklochbohrung 1 erzeugt wurde. Die Bohrungsgrundspitze 1020' ist aufgrund der gerundeten Querschneide 150 des in den Figuren 1 und 2 dargestellten Bauwerkzeuges 100 ebenfalls abgerundet. Auf diese Weise wird in radialer Richtung eine Schwächung des Blattwurzeleinsatzes 30 verhindert und gleichzeitig die Gefahr der Rissbildung durch die gerundeten Übergänge 1010' deutlich reduziert.

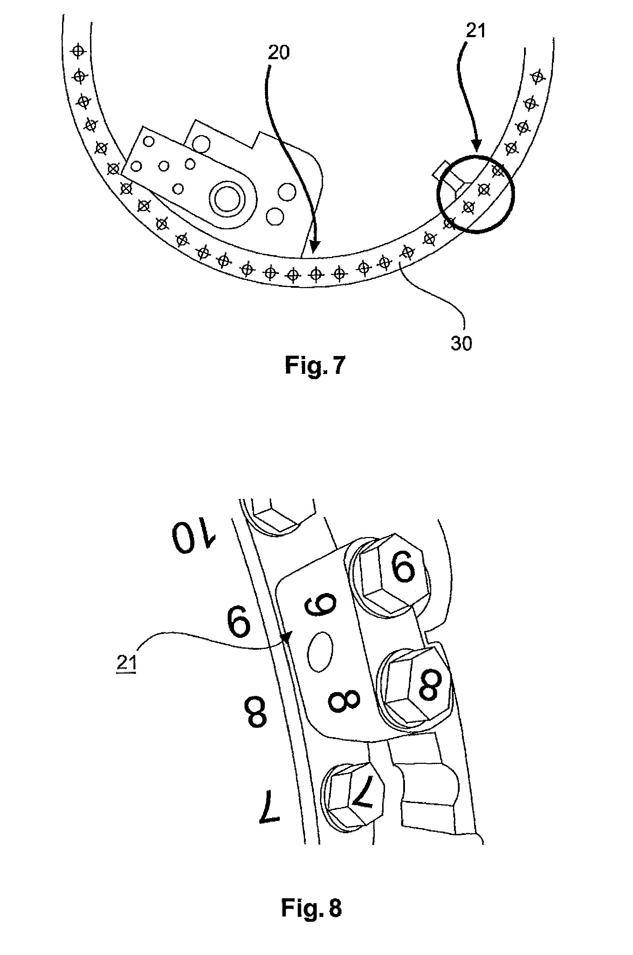

In den Figuren 7 und 8 sind mehrere Blattschrauben 20, die in Sacklochbohrungen eines Blattlagereinsatzes 30 eingeschraubt sind, zu erkennen. Zur Modifikation mehrerer Sacklochbohrungen kann von der Gesamtheit der Blattlagerschrauben 20 eines Blattlagereinsatzes 30 ein Teil entfernt werden, um die entsprechenden Sacklochbohrungen für eine Modifikation zugänglich zu machen, ohne jedoch das Rotorblatt demontieren zu müssen. Hierzu ist es insbesondere bevorzugt, jede zweite oder auch jede dritte der Blattschrauben 20 aus den entsprechenden Sacklochbohrung zu demontieren, diese Sacklochbohrungen zu modifizieren und anschließend die Blattschrauben wieder einzusetzen, um in einem erneuten Verfahrensdurchlauf dann die Blattschrauben aus den bisher noch nicht modifizierten Sacklochbohrungen zu entfernen, auch diese Sacklochbohrungen zu modifizieren, und die Blattschrauben 20 anschließend wieder einzuschrauben. Die Blattschrauben 21 der Rotorblattarretierungen werden vorzugsweise zusammen beziehungsweise paarweise entfernt.

Die Blattschrauben und die Sacklochbohrungen werden vorzugsweise, wie in Figur 8 dargestellt, vor dem Entfernen der Blattschrauben nummeriert.

### BEZUGSZEICHEN

- 1: Sacklochbohrung
- 11: Gewindeabschnitt
- 12, 12': Endabschnitt
- 13, 13': Bohrungsgrund
- 20: Blattschraube
- 21: Blattschrauben der Rotorblattarretierung
- 30: Blattwurzeleinsatz
- 40: Blattlager
- 100: Bohrwerkzeug
- 110: Bohrabschnitt
- 120: Handhabungsabschnitt
- 121: Außengewinde
- 130: Bohrspitze
- 140: Hauptschneide
- 141: Abgerundetes äußeres Ende
- 150: Querschneide
- 160: Nebenschneiden
- 170: Einstellvorrichtung
- 200: Reinigungsvorrichtung
- 210: Druckluftleitung
- 210a: erstes Ende der Druckluftleitung
- 210b: zweites Ende der Druckluftleitung
- 211: Druckluftschlauch
- 220: Saugleitung
- 220a: erstes Ende der Saugleitung
- 1010: ungerundete Kante
- 1010', 1020': Rundung
- 1020: ungerundete Spitze
- D: Druckluft
- X: Späne

## Patentansprüche

1. Bohrwerkzeug (100) zur Modifikation, insbesondere Vertiefung, einer Sacklochbohrung (1) mit einem Gewindeabschnitt (11), einem an den Gewindeabschnitt (11) anschließenden Endabschnitt (12, 12') und einen an den Endabschnitt (12, 12') anschließenden Bohrungsgrund (13, 13') in einem Blattwurzeleinsatz (30) einer Windenergieanlage im montierten Zustand eines Rotorblatts, mit einem Bohrabschnitt (110) und einem Handhabungsabschnitt (120), wobei an einer Bohrspitze (130) am Bohrabschnitt (110) zwei Hauptschneiden (140) und eine Querschneide (150) ausgebildet sind, **dadurch gekennzeichnet, dass** ein maximaler Durchmesser des Bohrabschnitts (110) maximal einem Durchmesser des Endabschnitts (12, 12') der Sacklochbohrung (1) entspricht und ein jeweils radial äußeres Ende der beiden Hauptschneiden (140) abgerundet ist, und vorzugsweise einen Radius von mindestens 4 mm, aufweist.

2. Bohrwerkzeug (100) nach dem vorhergehenden Anspruch,
**dadurch gekennzeichnet, dass** die Querschneide (150) abgerundet ist, und vorzugsweise einen Radius von mindestens 4 mm, aufweist.

3. Bohrwerkzeug (100) nach mindestens einem der vorhergehenden Ansprüche,
**dadurch gekennzeichnet, dass** am Bohrabschnitt (110) von der Bohrspitze (130) ausgehend Nebenschneiden (160) ausgebildet sind, wobei die Nebenschneiden (160) verschliffen sind.

4. Bohrwerkzeug (100) nach mindestens einem der vorhergehenden Ansprüche,
**dadurch gekennzeichnet, dass** am Handhabungsabschnitt (120) eine Einstellvorrichtung (170) angeordnet ist, die ausgebildet ist, das Eindringen des Bohrwerkzeugs (100) in die Sacklochbohrung (1) über eine vorbestimmte, einstellbare Tiefe hinaus zu verhindern, und wobei sich vorzugsweise eine radiale Führung ergibt.

5. Bohrwerkzeug (100) nach mindestens einem der vorhergehenden Ansprüche,
**dadurch gekennzeichnet, dass** der Handhabungsabschnitt (120) ein Außengewinde (121) aufweist und die Einstellvorrichtung (170) ein Innengewinde aufweist, das mit dem Außengewinde (121) des Handhabungsabschnitts (120) im Eingriff steht, wobei die vorbestimmte Tiefe vorzugsweise durch eine Drehung der Einstellvorrichtung (170) um den Handhabungsabschnitt (120) eingestellt werden kann.

6. Reinigungsvorrichtung (200) zur Reinigung einer Sacklochbohrung (1), insbesondere nach einer Modifikation, umfassend
eine mit einer Druckluftquelle verbindbare Druckluftleitung (210), deren Durchmesser geringer ist als der Durchmesser der zu reinigenden Sacklochbohrung (1), eine mit einer Unterdruckquelle verbindbare Saugleitung (220), deren Durchmesser vorzugsweise größer ist als der Durchmesser der zu reinigenden Sacklochbohrung (1),
wobei ein Abschnitt der Druckluftleitung (210) innerhalb der Saugleitung (220) verläuft und ein erstes Ende (210a) der Druckluftleitung (210) in Längsrichtung der Druckluftleitung (210) über ein erstes Ende (220a) der Saugleitung (220) hinausragt.

7. Reinigungsvorrichtung (200) nach mindestens einem der vorhergehenden Ansprüche,
**dadurch gekennzeichnet, dass** die Druckluftleitung (210) relativ zur Saugleitung (220) beweglich angeordnet ist, insbesondere in Längsrichtung der Druckluftleitung (210).

8. Verfahren zur Modifikation einer Sacklochbohrung (1) mit einem Gewindeabschnitt (12, 12'), einem an den Gewindeabschnitt (11) anschließenden Endabschnitt (12, 12') und einen an den Endabschnitt (12, 12') anschließenden Bohrungsgrund (13, 13') in einem Blattwurzeleinsatz (30) einer Windenergieanlage im montierten Zustand eines Rotorblatts,
umfassend:
- Entfernen einer in der Sacklochbohrung (1) befindlichen Blattschraube (20),
- Einführen eines Bohrwerkzeugs (100), vorzugsweise eines Bohrwerkzeugs (100) nach einem der Ansprüche 1-5, in die Sacklochbohrung (1),
- Einspannen des Bohrwerkzeugs (100) in eine Bohrmaschine,
- Vertiefung der Sacklochbohrung (1) um eine vorbestimmte Tiefe, wobei ein maximaler Durchmesser des Endabschnitts (12, 12') und des Bohrungsgrundes (13, 13') nach der Vertiefung maximal einem Durchmesser des Endabschnitts (12, 12') vor der Vertiefung entspricht und ein Übergang vom Endabschnitt (12, 12') zum Bohrungsgrund (13, 13') nach der Vertiefung abgerundet ist, vorzugsweise mit einem Radius von mindestens 2 mm, vorzugsweise mindestens 4 mm,
- Entfernen des Bohrwerkzeugs (100) und der Bohrmaschine,
- Montage der Blattschraube (20) in die modifizierte Sacklochbohrung (1), insbesondere unter Berücksichtigung eines maximalen Drehmoments.

9. Verfahren nach dem vorhergehenden Anspruch,
**gekennzeichnet durch**:
- Reinigen der Sacklochbohrung (1) nach der Vertiefung, vorzugsweise **durch** Einbringen von Druckluft (D) im Bereich des Endabschnitts (12, 12') und/oder des Bohrungsgrundes (13, 13') der Sacklochbohrung (1) und, vorzugsweise gleichzeitiges, Absaugen von Luft im Bereich einer Öffnung der Sacklochbohrung (1), insbesondere mittels einer Reinigungsvorrichtung (200) nach mindestens einem der vorhergehenden Ansprüche 6-7.

10. Verfahren nach mindestens einem der beiden vorhergehenden Ansprüche, **gekennzeichnet durch**:
- Prüfen des Endabschnitts (12, 12') und/oder des Bohrungsgrundes (13, 13') der Sacklochbohrung (1) auf mögliche Risse im Blattwurzeleinsatz (30) vor einer Modifikation der Sacklochbohrung (1), insbesondere vor der Vertiefung der Sacklochbohrung (1), wobei die Prüfung vorzugsweise mittels eines Wirbelstrom-Prüfverfahrens erfolgt.

11. Verfahren nach mindestens einem der vorhergehenden Ansprüche 8-10,
**gekennzeichnet durch**:
- Kontrolle des Endabschnitts (12, 12') und/oder des Bohrungsgrundes (13, 13') der Sacklochbohrung (1) nach einer Modifikation, insbesondere auf Oberflächenunebenheiten, wie Riefen Kerben oder scharfen Kanten, vorzugsweise nach der Vertiefung der Sacklochbohrung (1), wobei die Kontrolle vorzugsweise mittels einer Videoskopie erfolgt.

12. Verfahren nach mindestens einem der vorhergehenden Ansprüche 8-11,
**gekennzeichnet durch**:
- Dokumentation des Endabschnitts (12, 12') und/oder des Bohrungsgrundes (13, 13') der Sacklochbohrung (1) nach einer Modifikation, insbesondere nach der Vertiefung der Sacklochbohrung (1), wobei die Dokumentation vorzugsweise **durch** Erstellung von Fotografien der Sacklochbohrung (1), insbesondere des Endabschnitts (12, 12') und/oder des Bohrungsgrundes (13, 13'), erfolgt.

13. Verfahren nach mindestens einem der vorhergehenden Ansprüche 8-12,
**gekennzeichnet durch**:
- Einstellen der vorbestimmte Tiefe vor der Vertiefung der Sacklochbohrung (1) am Bohrwerkzeug (100), vorzugsweise mittels einer Einstellvorrichtung (170), wobei das Einstellen vorzugsweise vor dem Einspannen des Bohrwerkzeugs (100) in die Bohrmaschine erfolgt.

14. Verfahren nach mindestens einem der vorhergehenden Ansprüche 8-13,
**dadurch gekennzeichnet, dass** ein bei einer Prüfung des Endabschnitts (12, 12') und/oder des Bohrungsgrundes (13, 13') ermittelter Riss im Blattwurzeleinsatz (30) mit einer Schweißnaht geschlossen wird, wobei vorzugsweise das Schließen von Rissen im Blattwurzeleinsatz (30) vor einer Vertiefung der Sacklochbohrung (1) erfolgt.

15. Verfahren nach mindestens einem der vorhergehenden Ansprüche 8-14,
**dadurch gekennzeichnet, dass** zwischen der vorbereiteten Schweißnaht und einer GFK-Anbindung des Rotorblatts ein Kühlelement vorzugsweise an einer Rückseite eines mit der Schweißnaht zu versehenden Bereichs angeordnet wird, und vorzugsweise während der Schweißarbeiten eine Temperatur, insbesondere im Bereich der GFK-Anbindung des Rotorblatts, erfasst und vorzugsweise protokolliert wird.

16. Verfahren zur Modifikation mehrerer Sacklochbohrungen (1) in einem Blattwurzeleinsatz (30) einer Windenergieanlage im montierten Zustand eines Rotorblatts:
umfassend:
- Entfernen eines Teils der in den Sacklochbohrungen (1) in einem Blattwurzeleinsatz (30) befindlichen Blattschrauben (20), insbesondere Entfernen der Blattschrauben (20) aus jeder zweiten Sacklochbohrung (1), wobei vorzugsweise die Blattschrauben (20) und/oder die Sacklochbohrungen (1) zuvor nummeriert werden,
- Modifizieren der Sacklochbohrungen (1), aus denen die Blattschraube (20) entfernt wurde nach einem Verfahren nach mindestens einem der vorhergehenden Ansprüche 8-15.

17. Verfahren nach dem vorhergehenden Anspruch,
**dadurch gekennzeichnet, dass** zwei benachbarte Blattschrauben einer Blattarretierung (21) paarweise entfernt werden.

18. Verfahren zum Reinigen einer Sacklochbohrung (1) mit einem Gewindeabschnitt (11), einem an den Gewindeabschnitt (11) anschließenden Endabschnitt (12, 12') und einen an den Endabschnitt (12, 12') anschließenden Bohrungsgrund (13, 13'), insbesondere nach einer Modifikation bzw. Vertiefung der Sacklochbohrung (1), umfassend:
- Einbringen von Druckluft (D) im Bereich des Bohrungsgrundes (13, 13') und/oder des Endabschnitts (12, 12') der Sacklochbohrung (1) und, vorzugsweise gleichzeitiges, Absaugen von Luft im Bereich einer Öffnung der Sacklochbohrung (1).
